(19) Europäisches Patentamt
European Patent Office
Office européen des brevets

(11) **EP 1 981 820 B1**

(12) **FASCICULE DE BREVET EUROPEEN**

(45) Date de publication et mention
de la délivrance du brevet:
**21.10.2015 Bulletin 2015/43**

(51) Int Cl.:
***C03B 25/08*** *(2006.01)*     ***F27B 9/06*** *(2006.01)*
***F27B 9/40*** *(2006.01)*     ***G05D 23/19*** *(2006.01)*

(21) Numéro de dépôt: **07730836.9**

(86) Numéro de dépôt international:
**PCT/FR2007/000105**

(22) Date de dépôt: **19.01.2007**

(87) Numéro de publication internationale:
**WO 2007/090942 (16.08.2007 Gazette 2007/33)**

(54) **PROCEDE ET DISPOSITIF DE REGULATION DES SECTIONS DE REFROIDISSEMENT RADIATIVES D' UNE ETENDERIE DE VERRE PLAT**

VERFAHREN UND VORRICHTUNG ZUR REGELUNG VON STRAHLUNGSKÜHLUNGSABSCHNITTEN AUF EINER FLACHGLASKÜHLBAHN

METHOD AND DEVICE FOR REGULATION OF RADIATIVE COOLING SECTIONS ON A SHEET GLASS LEHR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2006 FR 0601064**

(43) Date de publication de la demande:
**22.10.2008 Bulletin 2008/43**

(73) Titulaire: **FIVES STEIN**
**91130 Ris-Orangis (FR)**

(72) Inventeurs:
• **SAILLIO, Agnan**
**F-92500 Rueil Malmaison (FR)**
• **SONG, Runmeng**
**F-77176 Nandy (FR)**

(74) Mandataire: **Cabinet Armengaud Aîné**
**3, avenue Bugeaud**
**75116 Paris (FR)**

(56) Documents cités:
DE-A1- 4 008 516    FR-A- 2 017 511
US-A- 4 303 437    US-A- 4 824 464
US-B1- 6 772 610

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Une étenderie de recuisson de verre plat est un four tunnel équipé de moyens de chauffage et de refroidissement permettant de faire suivre un cycle thermique de refroidissement contrôlé à un ruban de verre. Elle est placée en aval du bain d'étain pour une ligne de production selon le procédé float, ou en aval du four de fusion et de conditionnement pour une ligne de production de verre laminé.

Une étenderie réalisée suivant l'état de l'art est composée de différentes zones successives traditionnellement définies comme suit :

- La zone A0: Zone d'entrée facultative pour un éventuel traitement particulier,
- La zone A : Zone de pré-conditionnement,
- La zone B : Zone de recuisson,
- La zone C : Zone de refroidissement indirect,
- La zone D : Zone de refroidissement direct tempéré,
- La zone F : Zone de refroidissement direct final, et dernière zone de l'étenderie.

Dans les zones A0, A, B et C, le contrôle du refroidissement du verre est obtenu par échanges radiatifs avec des parties froides, communément appelés échangeurs, ou des éléments chauffants, comme par exemple des bougies électriques, alors que dans les zones D et F le refroidissement est réalisé par convection à air soufflé.

La phase la plus critique du cycle de recuisson de la bande de verre plat se situe dans les zones A, B et C dans lesquelles le verre est dans un état viscoélastique permettant la relaxation des contraintes crées lors des phases précédentes d'élaboration du verre, en particulier lors du formage du ruban. Dans ces zones, des gradients de températures trop importants sur la largeur du ruban de verre entraînent des contraintes excessives lors du refroidissement ultérieur, susceptibles de provoquer la casse du verre ou des problèmes de découpe en section de parachèvement. Il est donc important de contrôler finement le profil longitudinal et transversal de température du ruban de verre, particulièrement dans les zones ABC.

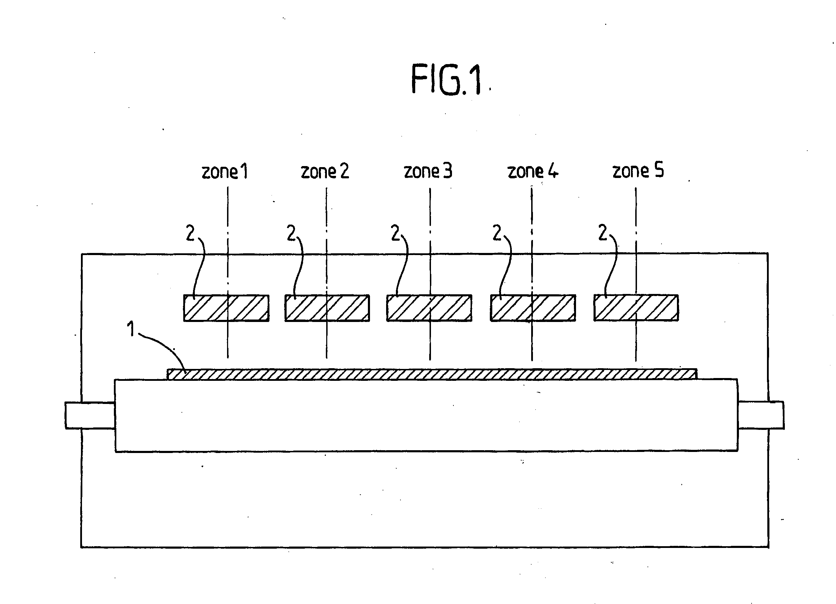

Un exemple de la construction suivant l'état de l'art des zones radiatives A, B et C est décrit ci-après et schématiquement présentée en coupe transversale en Figure 1 des dessins annexés. Pour plus de clarté, seuls les échangeurs de chaleur tubulaires 2 parallèles au déplacement du ruban de verre 1, situés au-dessus et sur la largeur du ruban de verre, sont représentés. Les échangeurs situés sous le ruban n'ont pas été représentés tout comme les moyens de chauffage qui feront l'objet d'une description spécifique.

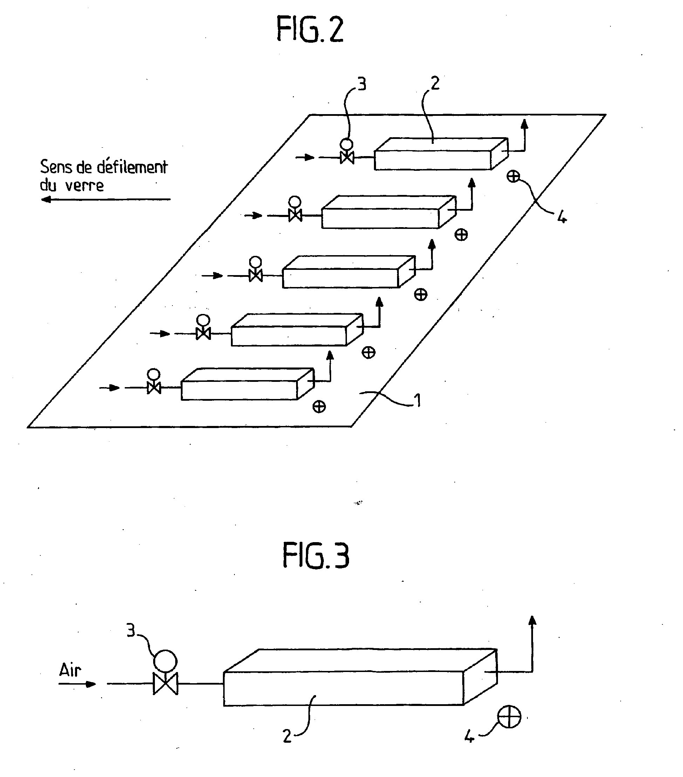

Dans les échangeurs 2 circule de l'air à une température sensiblement inférieure à celle du verre. Comme représenté en Figure 2, ce débit d'air est contrôlé dans chaque échangeur au moyen d'une vanne de régulation 3, implantée en amont ou en aval de chaque échangeur, de sorte d'ajuster la température de la surface de celui-ci située au regard du verre. L'échange par rayonnement entre l'échangeur et le verre étant lié à leur différence de température, il est ainsi possible d'ajuster la capacité de refroidissement de chaque échangeur pour obtenir la température du verre souhaitée en chaque point de la largeur du ruban. Le débit d'air circulant dans un échangeur 2 est contrôlé par un régulateur de température commandant la vanne 3 en fonction de l'écart entre une consigne de température et celle relevée par un organe de mesure de température 4, notamment un thermocouple, implanté en entrée de chaque zone dans l'axe de l'échangeur considéré. Une zone radiative comprend ainsi, sur la largeur du ruban de verre, une pluralité de boucles de régulation indépendantes entre elles, composées chacune d'une vanne de régulation 3 ajustant la capacité de refroidissement d'un échangeur 2 à partir de l'information délivrée par l'organe de mesure de température 4 associé.

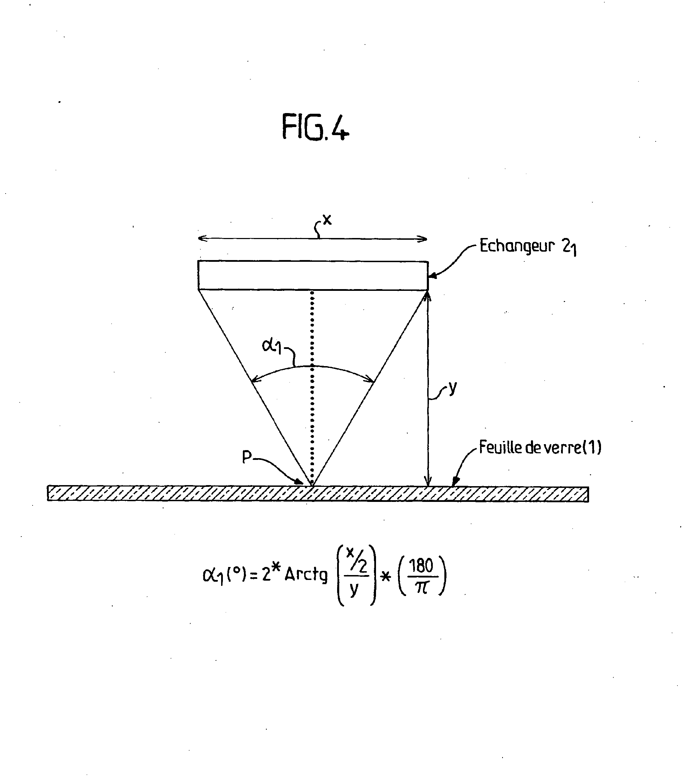

Selon la Figure 4, chaque point P de la surface du ruban de verre « voit » l'échangeur $2_1$ suivant un angle $\alpha_1$, dit « angle de rayonnement », qui caractérise la valeur proportionnelle de la capacité de refroidissement de chaque échangeur en ce point du ruban de verre. Cet angle de rayonnement dépend de la dimension de l'échangeur et de sa position par rapport à la feuille de verre. Il est donc lié à la géométrie de l'étenderie.

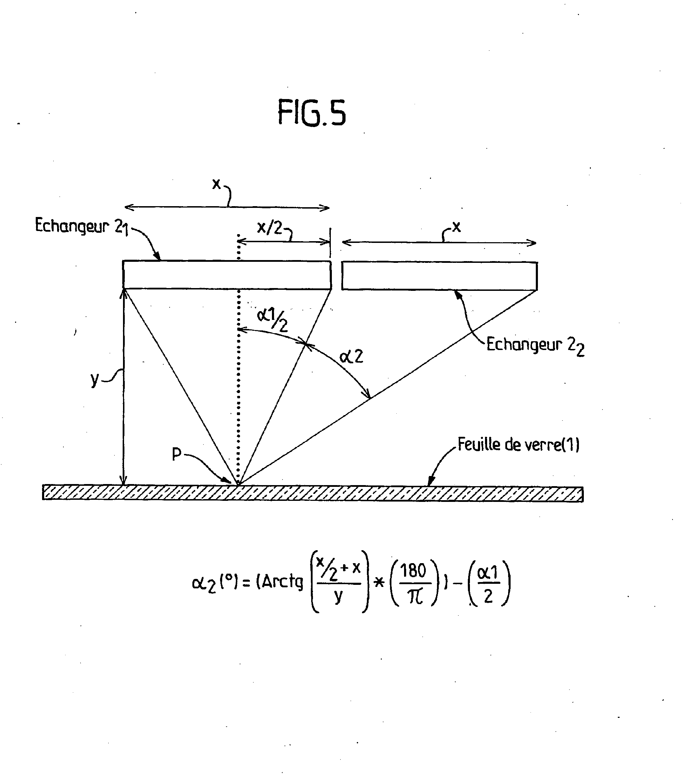

Suivant la Figure 5, ce même point P « voit » également l'échangeur voisin $2_2$ suivant un angle $\alpha_2$.

Dans ces zones radiatives, chaque point du ruban de verre est ainsi refroidi par rayonnement par l'échangeur tubulaire placé directement à la verticale du point considéré, mais également par les échangeurs voisins.

US-A-6 772 610 concerne un procédé de régulation des sections de refroidissement radiatives d' étenderies de verre plat équipées d'une pluralité d'éléments de chauffage et d'une pluralité d'éléments de refroidissement dans la direction de défilement du verre, chaque secteur radiatif étant équipé d'un organe de régulation de la capacité de chauffage ou de refroidissement de ce secteur radiatif recevant un signal d'un organe de mesure de la température du verre pour le secteur considéré.

FR-A-2 017 511 concerne un procédé du même genre dans lequel chaque élément de chauffage ou de refroidissement est composé d'une pluralité de secteurs radiatifs distincts dans la direction de la largeur du ruban,

Selon l'état de la technique, l'influence des échangeurs adjacents perturbe la régulation de la température du verre du fait que l'information délivrée par chaque organe de mesure de température n'est utilisée que pour ajuster la capacité de refroidissement de l'échangeur situé dans l'axe de l'organe de mesure considéré, ce qui rend difficile le contrôle du profil de température longitudinal et transversal du ruban de verre et génère une inertie importante avant d'atteindre le profil souhaité.

Ainsi, à titre d'exemple, une réduction de la capacité d'un échangeur peut être sans effet notable sur la température du ruban dans la zone considérée si les échangeurs adjacents sont au maximum de leur capacité.

De même, le niveau d'ouverture des vannes de régulation n'est souvent pas représentatif de la capacité de refroidissement effective des zones considérées ce qui gêne l'opérateur pour le contrôle du fonctionnement de l'étenderie.

L'invention a pour but, surtout, d'éviter ces inconvénients, et de mieux contrôler le profil de température longitudinal et transversal du ruban de verre.

Pour corriger ces problèmes techniques, selon l'invention, le procédé de régulation des sections de refroidissement radiatives des étenderies de verre plat équipées d'une pluralité d'éléments de chauffage et d'une pluralité d'éléments de refroidissement dans la direction de défilement du verre, chaque élément de chauffage ou de refroidissement étant composé d'une pluralité de secteurs radiatifs distincts dans la direction de la largeur du ruban, chaque secteur radiatif étant équipé d'un organe de régulation de la capacité de chauffage ou de refroidissement de ce secteur radiatif recevant un signal d'un organe de mesure de la température du verre pour le secteur considéré , est caractérisé en ce que la consigne de l'organe de régulation de la capacité de chauffage ou de refroidissement de chaque secteur radiatif est pondérée par un système de régulation d'un filtre de valeur, appelé « filtre matriciel », qui pondère l'influence du signal délivré par un organe de mesure de la température du verre, pour le secteur considéré, en prenant en compte l'influence sur le chauffage ou le refroidissement du verre des secteurs radiatifs adjacents selon la géométrie et l'implantation des secteurs radiatifs par rapport au point de mesure de la température du verre.

Selon l'invention, il est défini un « filtre matriciel » prenant en compte le multi-rayonnement des secteurs radiatifs vers le verre situé directement à la verticale du secteur concerné mais également vers le verre situé dans les zones de régulation adjacentes, à partir de la géométrie spécifique de l'étenderie.

Les zones de régulation n'étant pas indépendantes les unes des autres, le filtre matriciel permet à la régulation de chaque zone de prendre en compte l'interférence des zones adjacentes.

Le procédé de régulation pour des sections de refroidissement radiatives des étenderies de verre plat équipées d'une pluralité d'éléments de refroidissement dans la direction de défilement du verre constitués d'échangeurs de chaleur tubulaires parallèles au déplacement du verre, chaque échangeur étant alimenté en air de refroidissement au travers d'une vanne de régulation contrôlée par un régulateur de température en fonction de l'écart entre une consigne et le signal délivré par un organe de mesure de la température du verre, est caractérisé en ce que la consigne de la vanne de régulation est pondérée par un système de régulation d'un filtre appelé « filtre matriciel », qui pondère l'influence du signal délivré par l'organe de mesure de la température du verre en prenant en compte l'influence des échangeurs adjacents selon la géométrie et l'implantation des échangeurs par rapport au point de mesure de la température du verre.

Le procédé de régulation pour des sections de refroidissement radiatives des étenderies de verre plat équipées d'une pluralité d'éléments de chauffage dans la direction de défilement du verre constitués de tubes radiants électriques perpendiculaires à la direction de déplacement du verre, chaque tube radiant étant composé d'une succession de secteurs de chauffe sur la largeur du ruban de verre dont la capacité de chauffage est contrôlée par un régulateur de température en fonction de l'écart entre une consigne et le signal délivré par un organe de mesure de la température du verre, est caractérisé en ce que la consigne de capacité de chauffage de chaque secteur est pondérée par un système de régulation d'un filtre, appelé « filtre matriciel », qui pondère l'influence du signal délivré par l'organe de mesure de la température du verre en prenant en compte l'influence des secteurs de chauffage adjacents selon la géométrie et l'implantation des secteurs de chauffage par rapport au point de mesure de la température du verre.

Le système de régulation reçoit en entrée les valeurs de consigne (S1, S2...Sn) issues des régulateurs de température des divers secteurs, et est programmé pour fournir en sortie une consigne (Sj') utilisée pour le pilotage des vannes de régulation ayant pour valeur :

$$Sj' = \left(\frac{\alpha 1}{A1}\right)*S1 + \left(\frac{\alpha 2}{A1}\right)*S2 + \left(\frac{\alpha 3}{A1}\right)*S3 + \left(\frac{\alpha 4}{A1}\right)*S4 + \left(\frac{\alpha 5}{A1}\right)*S5 + \left(\frac{\alpha(n)}{A1}\right)*S(n)$$

les angles $\alpha_i$, $\beta_i$, $\gamma_i$ ... étant les angles sous lesquels les différents secteurs radiatifs sont vus d'un point du ruban de verre où est effectuée la mesure de température, pour le secteur respectif, et Aj étant égal à la somme des angles sous lesquels sont vus les différents secteurs radiatifs du point considéré du ruban de verre.

Le système de régulation reçoit en entrée les valeurs de consigne (S1, S2...Sn) issues des régulateurs de température des divers secteurs, et est programmé pour fournir en sortie une consigne (Sj') utilisée pour le pilotage de la capacité de chauffage des secteurs de chauffe ayant pour valeur :

$$Sj' = \left(\frac{\alpha 1}{A1}\right)*S1 + \left(\frac{\alpha 2}{A1}\right)*S2 + \left(\frac{\alpha 3}{A1}\right)*S3 + \left(\frac{\alpha 4}{A1}\right)*S4 + \left(\frac{\alpha 5}{A1}\right)*S5 + \left(\frac{\alpha(n)}{A1}\right)*S(n)$$

les angles $\alpha_i$, $\beta_i$, $\gamma_i$ ... étant les angles sous lesquels les différents secteurs radiatifs sont vus d'un point du ruban de verre où est effectuée la mesure de température, pour le secteur respectif, et Aj étant égal à la somme des angles sous lesquels sont vus les différents secteurs radiatifs du point considéré du ruban de verre.

Dans le cas d'une étenderie équipée d'un nombre (n) d'organes de mesure de la température, la matrice est déterminée en fonction du poids représentatif de chaque organe de mesure de la température.

L'invention est également relative à un dispositif de régulation des sections de refroidissement radiatives d'une étenderie de verre plat équipée d'une pluralité d'éléments de chauffage et d'une pluralité d'éléments de refroidissement dans la direction de défilement du verre, chaque élément de chauffage ou de refroidissement étant composé d'une pluralité de secteurs radiatifs distincts dans la direction de la largeur du ruban, chaque secteur radiatif étant équipé d'un organe de régulation de la capacité de chauffage ou de refroidissement de ce secteur radiatif recevant un signal d'un organe de mesure de la température du verre pour le secteur considéré, caractérisé en ce qu'il comprend un système de régulation qui est branché de manière à recevoir en entrée les valeurs de consigne (S1, S2...Sn) issues des régulateurs de température des divers secteurs, ce système de régulation étant programmé pour fournir en sortie une consigne (Sj') utilisée pour le pilotage des vannes de régulation ayant pour valeur :

$$Sj' = \left(\frac{\alpha 1}{A1}\right)*S1 + \left(\frac{\alpha 2}{A1}\right)*S2 + \left(\frac{\alpha 3}{A1}\right)*S3 + \left(\frac{\alpha 4}{A1}\right)*S4 + \left(\frac{\alpha 5}{A1}\right)*S5 + \left(\frac{\alpha(n)}{A1}\right)*S(n)$$

les angles $\alpha_i$, $\beta_i$, $\gamma_i$ ... étant les angles sous lesquels les différents secteurs radiatifs sont vus d'un point du ruban de verre où est effectuée la mesure de température, pour le secteur respectif, et Aj étant égal à la somme des angles sous lesquels sont vus les différents secteurs radiatifs du point considéré du ruban de verre.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Figure 1 est une coupe verticale transversale schématique d'une zone d'étenderie avec échangeurs, selon l'état de la technique.

Figure 2 est un schéma en perspective illustrant une régulation de température selon l'état de la technique dans une zone d'une étenderie.

Figure 3 montre schématiquement en perspective à plus grande échelle un échangeur de Figure 2.

Figure 4 est une coupe verticale schématique illustrant l'angle de rayonnement d'un échangeur pour un point du ruban de verre.

Figure 5 est une coupe verticale schématique illustrant, semblablement à Figure 4, les angles de rayonnement de deux échangeurs adjacents, pour un point du ruban de verre.

Figure 6 est un schéma du procédé de régulation thermique et du filtre selon l'invention.

Figure 7 est une coupe verticale transversale schématique d'une zone d'étenderie avec éléments chauffants, et

Figure 8 est une vue schématique en perspective des éléments chauffants de Figure 7.

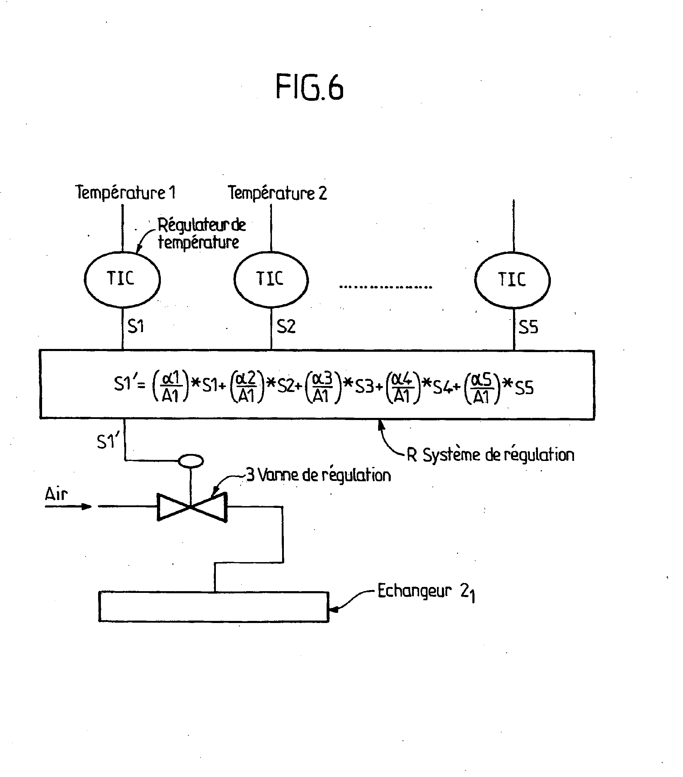

Sur les Figures 1 et 2, comme déjà expliqué, on a représenté le ruban de verre 1 qui, selon l'état de la technique, défile dans une étenderie entre des échangeurs de chaleur $2_i$ disposés au-dessus et au-dessous (non montrés sur Figure1) du ruban. L'indice i, qui n'est pas porté sur les Figures 1 à 3, après le chiffre 2 identifie la zone de l'étenderie à laquelle correspond l'échangeur. Les échangeurs $2_1...2_5$ sont répartis sur la largeur du ruban, par exemple en cinq zones : zone 1, zone 2, zone 3, zone 4, zone 5, et s'étendent sur une fraction de longueur de l'étenderie. Pour chaque échangeur une vanne de régulation 3 de débit de fluide, généralement de l'air, est disposée en amont ou en aval de l'échangeur. Cette vanne est commandée par un régulateur de température TIC (Figure 6) qui reçoit un signal provenant d'un organe de mesure de température 4, par exemple un thermocouple disposé à proximité du ruban de verre, en lien avec l'échangeur $2_i$ concerné.

On considère maintenant un exemple avec des échangeurs $2_i$ constituant des éléments de refroidissement.

En prenant comme hypothèse que le thermocouple 4 de mesure de température se situe au milieu d'un échangeur, la valeur de l'angle de rayonnement $\alpha_1$ pour l'échangeur $2_1$ situé à la verticale du point considéré, représenté en Figure 4, est égal à :

$$\alpha_1\,(rd) = 2 * Arctg\left(\frac{x/2}{y}\right) \quad \text{exprimé en radians}$$

ou

$$\alpha_1\,(°) = 2 * Arctg\left(\frac{x/2}{y}\right) * \left(\frac{180}{\pi}\right) \quad \text{exprimé en degrés d'arc}$$

La valeur de l'angle de rayonnement $\alpha_2$ de l'échangeur adjacent $2_2$, représenté en Figure 5, est égal à :

$$\alpha_2\,(rd) = Arctg\left(\frac{x/2 + x}{y}\right) - \left(\frac{\alpha 1}{2}\right)$$

ou

$$\alpha_2\,(°) = \left(Arctg\left(\frac{x/2 + x}{y}\right) * \left(\frac{180}{\pi}\right)\right) - \left(\frac{\alpha 1}{2}\right)$$

De la même manière, on obtient pour l'échangeur suivant $2_3$ :

$$\alpha_3\,(rd) = Arctg\left(\frac{x/2 + 2x}{y}\right) - \left(\frac{\alpha 1}{2}\right) - \alpha_2$$

ou

$$\alpha_3\,(°) = \left(Arctg\left(\frac{x/2 + 2x}{y}\right) * \left(\frac{180}{\pi}\right)\right) - \left(\frac{\alpha 1}{2}\right) - \alpha_2$$

On note que pour les échangeurs suivants plus distants, l'effet devient de plus en plus faible et peut être négligé.

Pour une étenderie de 5 zones équipées de 5 thermocouples, en fonction de l'influence des échangeurs on obtient ainsi la matrice suivante :

|  | Température 1 | Température 2 | Température 3 | Température 4 | Température 5 |
|---|---|---|---|---|---|
| Echangeur $2_1$ | $\alpha_1$ | $\beta_1$ | $\gamma_1$ | $\delta_1$ | $\mu_1$ |
| Echangeur $2_2$ | $\alpha_2$ | $\beta_2$ | $\gamma_2$ | $\delta_2$ | $\mu_2$ |
| Echangeur $2_3$ | $\alpha_3$ | $\beta_3$ | $\gamma_3$ | $\delta_3$ | $\mu_3$ |
| Echangeur $2_4$ | $\alpha_4$ | $\beta_4$ | $\gamma_4$ | $\delta_4$ | $\mu_4$ |
| Echangeur $2_5$ | $\alpha_5$ | $\beta_5$ | $\gamma_5$ | $\delta_5$ | $\mu_5$ |
| Valeurs totales Aj des angles | A1 | A2 | A3 | A4 | A5 |

A1, A2, A3, A4 et A5 représentent les valeurs totales des angles et peuvent s'exprimer, pour n échangeurs, par :

$$A1 = \sum_n^1 \alpha, \; A2 = \sum_n^1 \beta, \; A3 = \sum_n^1 \gamma, \; A4 = \sum_n^1 \delta, \; A5 = \sum_n^1 \mu,$$

En résumé, les angles $\alpha_i$, $\beta_i$, $\gamma_i$ ... sont les angles sous lesquels les échangeurs $2_1$, $2_2$, $2_3$,... sont vus d'un point du ruban de verre où est effectuée la mesure de température sous l'échangeur respectif $2_1$, $2_2$, $2_3$....

Aj est égal à la somme des angles sous lesquels sont vus les différents échangeurs $2_1$, $2_2$, $2_3$,...d'un point Pj considéré du ruban de verre.

La matrice des poids, en %, des différentes zones est donc :

|  | Température 1 | Température 2 | Température 3 | Température 4 | Température 5 |
|---|---|---|---|---|---|
| Echangeur $2_1$ | $\alpha1/A1$ | $\beta1/A2$ | $\gamma1/A3$ | $\delta1/A4$ | $\mu1/A5$ |
| Echangeur $2_2$ | $\alpha2/A1$ | $\beta2/A2$ | $\gamma2/A3$ | $\delta2/A4$ | $\mu2/A5$ |
| Echangeur $2_3$ | $\alpha3/A1$ | $\beta3/A2$ | $\gamma3/A3$ | $\delta3/A4$ | $\mu3/A5$ |
| Echangeur $2_4$ | $\alpha4/A1$ | $\beta4/A2$ | $\gamma4/A3$ | $\delta4/A4$ | $\mu4/A5$ |
| Echangeur $2_5$ | $\alpha5/A1$ | $\beta5/A2$ | $\gamma5/A3$ | $\delta5/A4$ | $\mu5/A5$ |

A titre d'exemple, pour une géométrie et une implantation des échangeurs données, la matrice des poids des différentes zones est reprise ci-dessous :

|  | Température 1 | Température 2 | Température 3 | Température 4 | Température 5 |
|---|---|---|---|---|---|
| Echangeur $2_1$ | 72% | 22% | 0% | 0% | 0% |
| Echangeur $2_2$ | 28% | 55% | 18% | 0% | 0% |
| Echangeur $2_3$ | 0% | 23% | 63% | 23% | 0% |
| Echangeur $2_4$ | 0% | 0% | 19% | 55% | 28% |
| Echangeur $2_5$ | 0% | 0% | 0% | 22% | 72% |

Selon l'état de la technique, la valeur de consigne Si en sortie de l'organe de régulation TIC affecté à l'échangeur $2_i$ serait fournie à la vanne 3 de l'échangeur $2_i$. Cette valeur Si ne prend en compte que le signal de l'organe de mesure de température 4 associé au seul échangeur considéré $2_i$.

Au contraire, selon l'invention, comme représenté en Figure 6 pour l'échangeur $2_1$, la consigne S1 en sortie de l'organe de régulation de température TIC est pondérée par un système de régulation R d'un filtre, appelé « Filtre matriciel » qui prend en compte l'influence de la température principale, la plus proche de l'échangeur concerné, mais également celles des températures adjacentes.

Le système de régulation R comprend un calculateur dans lequel sont introduits les paramètres $\alpha_1$, $\alpha_2$...$\alpha_n$, $\beta_1$...$\beta_n$... $A_1$, $A_2$,...$A_n$ relatifs à un échangeur $2_1$, $2_2$...$2_n$. Le système de régulation R reçoit en entrée les différentes consignes S1...Sn des organes de régulation TIC associés aux divers échangeurs $2_1$, ...$2_n$, et est programmé pour fournir en sortie la valeur de consigne pondérée S1' appliquée à la vanne 3 de l'échangeur $2_1$. La consigne S1' utilisée pour le pilotage de la vanne de régulation de l'échangeur $2_1$, devient avec la pondération par le filtre matriciel :

$$S1' = \left(\frac{\alpha1}{A1}\right)*S1+ \left(\frac{\alpha2}{A1}\right)*S2+ \left(\frac{\alpha3}{A1}\right)*S3+ \left(\frac{\alpha4}{A1}\right)*S4+ \left(\frac{\alpha5}{A1}\right)*S5$$

La consigne S2' utilisée pour le pilotage de la vanne de régulation de l'échangeur $2_2$, avec la pondération par le filtre matriciel , se déduit de la relation précédente en remplaçant $\alpha1$, $\alpha2$,... par $\beta1$, $\beta2$, ...etA1 par A2.

Les consignes S3' ..S5' pour le pilotage des vannes de régulation des échangeurs $2_3$...$2_5$ se déduiraient d'une manière semblable.

Dans le cas d'une étenderie équipée d'un nombre de thermocouples supérieur au nombre d'échangeurs, la matrice sera déterminée en fonction du poids représentatif de chaque thermocouple.

Le nombre de thermocouples (n) et le nombre d'échangeurs (m) étant différents, on obtient une matrice de dimension (n x m).

Les valeurs de consigne Sj' adressées aux vannes de régulation se déduiront dans ce cas de la formule suivante:

$$Sj' = \left(\frac{\alpha1}{A1}\right)*S1 + \left(\frac{\alpha2}{A1}\right)*S2 + \left(\frac{\alpha3}{A1}\right)*S3 + \left(\frac{\alpha4}{A1}\right)*S4 + \left(\frac{\alpha5}{A1}\right)*S5 + \left(\frac{\alpha(n)}{A1}\right)*S(n)$$

pour j compris entre 1 et m, avec substitution correspondante de $\alpha$ par $\beta$ et de A1 par A2 pour le deuxième échangeur, et ainsi de suite.

Selon l'invention, la prise en compte de ce filtre matriciel pour le pilotage des vannes de régulation permet :

- d'amener rapidement, et de façon très stable, les températures du verre mesurées aux valeurs de consigne,

- de disposer d'une ouverture de vanne de régulation représentative de la capacité instantanée de refroidissement de l'échangeur ce qui facilite la compréhension des opérateurs du fonctionnement de l'étenderie.

Le procédé de régulation selon l'invention des sections de refroidissement radiatives des étenderies de verre plat équipées d'une pluralité d'éléments de refroidissement dans la direction de défilement du verre constitués d'échangeurs de chaleur 2 tubulaires parallèles au déplacement du verre, chaque échangeur étant alimenté en air de refroidissement au travers d'une vanne de régulation contrôlée par un régulateur de température TIC , via un système de régulation, en fonction de l'écart entre une consigne et le signal délivré par un organe de mesure de la température du verre, est Ainsi caractérisé en ce que la consigne Sj de la vanne de régulation à la sortie du régulateur de température est pondérée Sj' par le système de régulation R d'un filtre appelé « filtre matriciel », qui pondère l'influence du signal délivré par l'organe de mesure de la température du verre en prenant en compte l'influence des échangeurs adjacents selon la géométrie et l'implantation des échangeurs par rapport au point de mesure de la température du verre. C'est cette consigne pondérée Sj' qui est envoyée vers la vanne de régulation 3.

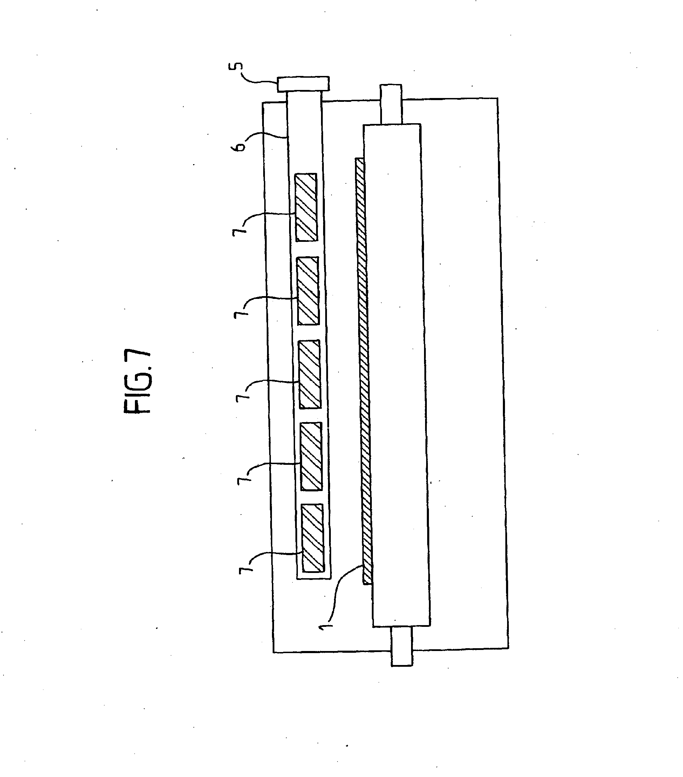

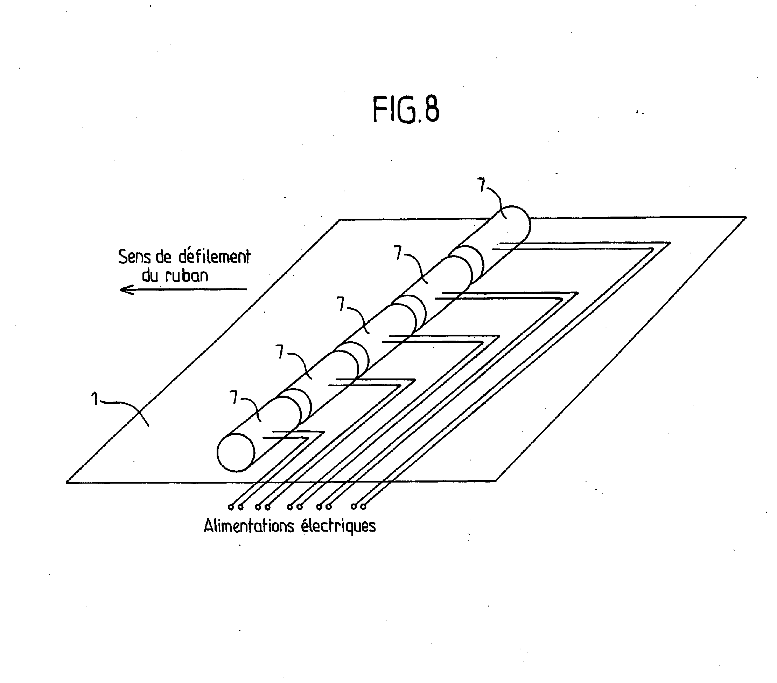

Le raisonnement décrit précédemment pour les échangeurs de refroidissement du ruban de verre est reconduit pour le contrôle des éléments chauffants, par exemple des tubes radiants électriques 5 (Figures 7 et 8), communément appelés bougies électriques.

Suivant la Figure 7, ces tubes radiants 5 sont montés dans l'étenderie avec leur axe longitudinal parallèle à l'axe transversal du ruban de verre.

Un tube radiant électrique est constitué d'une enveloppe externe 6 généralement cylindrique, par exemple en acier réfractaire, dans laquelle sont placés une succession de secteurs de chauffe 7 distincts. Chaque secteur de chauffe 7 est constitué d'une résistance électrique contrôlée individuellement, par exemple à partir d'un thyristor, de sorte d'ajuster la température de surface du tube radiant sur la longueur située au regard du secteur de chauffe. L'échange par rayonnement entre le tube radiant et le verre étant lié à leur différence de température, il est ainsi possible d'ajuster la capacité de chauffage de chaque secteur de chauffe pour obtenir la température du verre souhaitée en chaque point de la largeur du ruban. La puissance de chauffe de chaque secteur 7 est contrôlée par un régulateur de température commandant l'organe de puissance en fonction de l'écart entre une consigne de température et celle relevée par un organe de mesure de température, généralement un thermocouple, implanté en entrée de chaque zone dans l'axe du secteur de chauffe considéré.

Le principe de régulation matricielle décrit précédemment pour le contrôle des échangeurs est reconduit pour le contrôle de chaque secteur de chauffe de sorte de prendre en compte l'influence des autres secteurs de chauffe adjacents et voisins. Ainsi, la consigne utilisée pour le pilotage de la capacité de chauffage des secteurs de chauffe a pour valeur :

$$Sj' = \left(\frac{\alpha1}{A1}\right)*S1 + \left(\frac{\alpha2}{A1}\right)*S2 + \left(\frac{\alpha3}{A1}\right)*S3 + \left(\frac{\alpha4}{A1}\right)*S4 + \left(\frac{\alpha5}{A1}\right)*S5 + \left(\frac{\alpha(n)}{A1}\right)*S(n)$$

Cette formule donnant Sj' fait intervenir $\alpha_1$, $\alpha_2$... angles relatifs au point du ruban de verre situé sous le premier échangeur $2_1$. Les explications d'ensemble font comprendre que la formule s'applique aux différents points du ruban de verre dans la direction transversale, sous réserve du remplacement de $\alpha$ par $\beta$ pour j= 2 et de $A_1$ par $A_2$ ; de $\alpha$ par $\gamma$ pour j = 3 et $A_1$ par $A_3$, etc...

On peut généraliser et condenser cette formule en adoptant une notation à deux indices i j et en conservant une même lettre, par exemple $\alpha$, pour désigner les angles sous lesquels les échangeurs $2_i$ sont vus depuis différents points du ruban de verre. La formule devient alors :

$$Sj' = \sum_{i=1}^{i=n} \left(\frac{\alpha ji}{Aj}\right) * Si$$

$\alpha$ ji étant l'angle sous lequel d'un point Pj du ruban de verre est vu l'échangeur 2i.

Le procédé de régulation selon l'invention des sections de refroidissement radiatives des étenderies de verre plat équipées d'une pluralité d'éléments de chauffage dans la direction de défilement du verre constitués de tubes radiants électriques 5 perpendiculaires à la direction de déplacement du verre, chaque tube radiant étant composé d'une succession de secteurs de chauffe sur la largeur du ruban de verre dont la capacité de chauffage est contrôlée par un régulateur de température TIC, via un système de régulation, en fonction de l'écart entre une consigne et le signal délivré par un organe de mesure de la température du verre, est ainsi caractérisé en ce que la consigne de capacité de chauffage Sj de chaque secteur à la sortie du régulateur de température est pondérée Sj' par le système de régulation R d'un filtre appelé « filtre matriciel », qui pondère l'influence du signal délivré par l'organe de mesure de la température du verre en prenant en compte l'influence des secteurs de chauffage adjacents selon la géométrie et l'implantation des secteurs de chauffage par rapport au point de mesure de la température du verre. C'est cette consigne pondérée Sj' qui est envoyée vers le secteur de chauffe 7.

**Revendications**

1. Procédé de régulation des sections de refroidissement radiatives des étenderies de verre plat équipées d'une pluralité d'éléments de chauffage et d'une pluralité d'éléments de refroidissement dans la direction de défilement du verre, chaque élément de chauffage ou de refroidissement étant composé d'une pluralité de secteurs radiatifs distincts dans la direction de la largeur du ruban, **caractérisé en ce que** la consigne (Sj) de l'organe de régulation (TIC) de la capacité de chauffage ou de refroidissement de chaque secteur radiatif est pondérée (Sj') par un système de régulation (R) d'un filtre, appelé « filtre matriciel », qui pondère l'influence du signal délivré par un organe de mesure (4) de la température du verre, pour le secteur considéré, en prenant en compte l'influence sur le chauffage ou le refroidissement du verre des secteurs radiatifs adjacents selon la géométrie et l'implantation des secteurs radiatifs par rapport au point de mesure de la température du verre.

2. Procédé de régulation selon la revendication 1 des sections de refroidissement radiatives des étenderies de verre plat équipées d'une pluralité d'éléments de refroidissement dans la direction de défilement du verre constitués d'échangeurs de chaleur tubulaires (2) parallèles au déplacement du verre, chaque échangeur étant alimenté en air de refroidissement au travers d'une vanne de régulation (3) contrôlée par un régulateur de température (TIC) en fonction de l'écart entre une consigne et le signal délivré par un organe de mesure (4) de la température du verre, **caractérisé en ce que** la consigne de la vanne de régulation est pondérée par un système de régulation (R) d'un filtre appelé « filtre matriciel », qui pondère l'influence du signal délivré par l'organe de mesure de la température du verre en prenant en compte l'influence des échangeurs adjacents selon la géométrie et l'implantation des échangeurs par rapport au point de mesure de la température du verre.

3. Procédé de régulation selon la revendication 1 des sections de refroidissement radiatives des étenderies de verre plat équipées d'une pluralité d'éléments de chauffage dans la direction de défilement du verre constitués de tubes radiants électriques (5) perpendiculaires à la direction de déplacement du verre, chaque tube radiant étant composé d'une succession de secteurs de chauffe (7) sur la largeur du ruban de verre dont la capacité de chauffage est contrôlée par un régulateur de température en fonction de l'écart entre une consigne et le signal délivré par un organe de mesure de la température du verre, **caractérisé en ce que** la consigne de capacité de chauffage de chaque secteur est pondérée par un système de régulation (R) d'un filtre, appelé « filtre matriciel », qui pondère l'influence du signal délivré par l'organe de mesure de la température du verre en prenant en compte l'influence des secteurs de chauffage adjacents selon la géométrie et l'implantation des secteurs de chauffage par rapport au point de mesure de la température du verre.

4. Procédé selon la revendication 2, **caractérisé en ce que** le système de régulation (R) reçoit en entrée les valeurs de consigne (S1, S2...Sn) issues des régulateurs de température (TIC) des divers secteurs, et est programmé pour fournir en sortie une consigne (Sj') utilisée pour le pilotage des vannes de régulation ayant pour valeur :

$$Sj' = \sum_{i=1}^{i=n} \left( \frac{\alpha ji}{Aj} \right) \star Si$$

αji étant l'angle sous lequel d'un point Pj du ruban de verre est vu l'échangeur 2i, et Aj étant égal à la somme des angles sous lesquels sont vus les différents secteurs radiatifs du point considéré du ruban de verre.

5. Procédé selon la revendication 3, **caractérisé en ce que** le système de régulation (R) reçoit en entrée les valeurs de consigne (S1, S2...Sn) issues des régulateurs de température (TIC) des divers secteurs, et est programmé pour fournir en sortie une consigne (Sj') utilisée pour le pilotage de la capacité de chauffage des secteurs de chauffe ayant pour valeur :

$$Sj' = \sum_{i=1}^{i=n} \left( \frac{\alpha ji}{Aj} \right) \star Si$$

αji étant l'angle sous lequel d'un point Pj du ruban de verre est vu l'échangeur 2i, et Aj étant égal à la somme des angles sous lesquels sont vus les différents-secteurs radiatifs du point considéré du ruban de verre.

6. Procédé selon la revendication 1 ou 2, **caractérisé en ce que** dans le cas d'une étenderie équipée d'un nombre (n) de thermocouples, la matrice est déterminée en fonction du poids représentatif de chaque thermocouple.

7. Dispositif de régulation des sections de refroidissement radiatives d'une étenderie de verre plat équipée d'une pluralité d'éléments de chauffage et d'une pluralité d'éléments de refroidissement dans la direction de défilement du verre, chaque élément de chauffage ou de refroidissement étant composé d'une pluralité de secteurs radiatifs distincts dans la direction de la largeur du ruban, chaque secteur radiatif étant équipé d'un organe de régulation (TIC) de la capacité de chauffage ou de refroidissement de ce secteur radiatif qui est connecté à un organe de mesure (4) de la température du verre pour le secteur considéré, et reçoit de cet organe de mesure (4) un signal , **caractérisé en ce qu'**il comprend un système de régulation (R) qui est branché de manière à recevoir en entrée les valeurs de consigne (S1, S2...Sn) issues des régulateurs de température (TIC) des divers secteurs, ce système de régulation étant programmé pour fournir en sortie une consigne (Sj') utilisée pour le pilotage des vannes de régulation (3) ayant pour valeur :

$$Sj' = \sum_{i=1}^{i=n} \left( \frac{\alpha ji}{Aj} \right) \star Si$$

αji étant l'angle sous lequel d'un point Pj du ruban de verre est vu l'échangeur 2i, et Aj étant égal à la somme des angles sous lesquels sont vus les différents secteurs radiatifs du point considéré du ruban de verre.

**Patentansprüche**

1. Verfahren zur Regelung der Strahlungskühlabschnitte von Flachglaskühlöfen, die mit einer Vielzahl von Heizelementen und mit einer Vielzahl von Kühlelementen in der Laufrichtung des Glases ausgestattet sind, wobei jedes Heiz- oder Kühlelement aus einer Vielzahl von getrennten Strahlungssektoren in der Breitenrichtung des Bandes besteht, **dadurch gekennzeichnet, dass** der Sollwert (Sj) des Organs zur Regelung (TIC) der Heiz- oder Kühlleistung eines jeden Strahlungssektors durch ein System zur Regelung (R) eines Filters, genannt "Matrixfilter", gewichtet wird (Sj'), das den Einfluss des durch ein Organ zur Messung (4) der Temperatur des Glases gelieferten Signals für den betrachteten Sektor unter Berücksichtigung des Einflusses auf das Erwärmen oder das Abkühlen des Glases der angrenzenden Strahlungssektoren entsprechend der Geometrie und der Anordnung der Strahlungssektoren in Bezug auf die Stelle der Messung der Temperatur des Glases gewichtet.

2. Verfahren nach Anspruch 1 zur Regelung der Strahlungskühlabschnitte von Flachglaskühlöfen, die mit einer Vielzahl von Kühlelementen in der Laufrichtung des Glases, welche von zu der Bewegung des Glases parallelen, rohrförmigen Wärmetauschern (2) gebildet sind, ausgestattet sind, wobei jeder Tauscher über ein Regelventil (3), das durch einen Temperaturregler (TIC) in Abhängigkeit von der Abweichung zwischen einem Sollwert und dem durch ein Organ zur Messung (4) der Temperatur des Glases gelieferten Signal gesteuert wird, mit Kühlluft beaufschlagt wird, **dadurch gekennzeichnet, dass** der Sollwert des Regelventils durch ein System zur Regelung (R) eines Filters, genannt "Matrixfilter", gewichtet wird, das den Einfluss des durch das Organ zur Messung der Temperatur des Glases gelieferten Signals unter Berücksichtigung des Einflusses der angrenzenden Tauscher entsprechend der Geometrie und der Anordnung der Tauscher in Bezug auf die Stelle der Messung der Temperatur des Glases gewichtet.

3. Verfahren nach Anspruch 1 zur Regelung der Strahlungskühlabschnitte von Flachglaskühlöfen, die mit einer Vielzahl von Heizelementen in der Laufrichtung des Glases, welche von zu der Bewegungsrichtung des Glases senkrechten, elektrischen Strahlrohren (5) gebildet sind, ausgestattet sind, wobei jedes Strahlrohr aus einer Folge von Heizsektoren (7) über die Breite des Glasbandes besteht, deren Heizleistung durch einen Temperaturregler in Abhängigkeit von der Abweichung zwischen einem Sollwert und dem durch ein Organ zur Messung der Temperatur des Glases gelieferten Signal gesteuert wird, **dadurch gekennzeichnet, dass** der Heizleistungssollwert eines jeden Sektors durch ein System zur Regelung (R) eines Filters, genannt "Matrixfilter", gewichtet wird, das den Einfluss des durch das Organ zur Messung der Temperatur des Glases gelieferten Signals unter Berücksichtigung des Einflusses der angrenzenden Heizsektoren entsprechend der Geometrie und der Anordnung der Heizsektoren in Bezug auf die Stelle der Messung der Temperatur des Glases gewichtet.

4. Verfahren nach Anspruch 2, **dadurch gekennzeichnet, dass** das Regelungssystem (R) eingangsseitig die aus den Temperaturreglern (TIC) der verschiedenen Sektoren hervorgegangenen Sollwerte (S1, S2...Sn) empfängt und dazu programmiert ist, ausgangsseitig einen Sollwert (Sj') zu liefern, der für die Steuerung der Regelventile verwendet wird, mit dem Wert:

$$Sj' = \sum_{i=1}^{i=n} \left(\frac{\alpha ji}{Aj}\right) * Si$$

wobei $\alpha ji$ der Winkel ist, unter dem von einem Punkt Pj des Glasbandes der Tauscher 2i betrachtet wird, und wobei Aj gleich der Summe der Winkel ist, unter denen die verschiedenen Strahlungssektoren von dem betrachteten Punkt des Glasbandes betrachtet werden.

5. Verfahren nach Anspruch 3, **dadurch gekennzeichnet, dass** das Regelungssystem (R) eingangsseitig die aus den Temperaturreglern (TIC) der verschiedenen Sektoren hervorgegangenen Sollwerte (S1, S2...Sn) empfängt und dazu programmiert ist, ausgangsseitig einen Sollwert (Sj') zu liefern, der für die Steuerung der Heizleistung der Heizsektoren verwendet wird, mit dem Wert:

$$Sj' = \sum_{i=1}^{i=n} \left(\frac{\alpha ji}{Aj}\right) * Si$$

wobei $\alpha ji$ der Winkel ist, unter dem von einem Punkt Pj des Glasbandes der Tauscher 2i betrachtet wird, und wobei Aj gleich der Summe der Winkel ist, unter denen die verschiedenen Strahlungssektoren von dem betrachteten Punkt des Glasbandes betrachtet werden.

6. Verfahren nach Anspruch 1 oder 2, **dadurch gekennzeichnet, dass** im Fall eines Kühlofens, der mit einer Anzahl (n) von Thermoelementen ausgestattet ist, die Matrix in Abhängigkeit von dem repräsentativen Gewicht eines jeden Thermoelements bestimmt wird.

7. Vorrichtung zur Regelung der Strahlungskühlabschnitte eines Flachglaskühlofens, der mit einer Vielzahl von Heizelementen und mit einer Vielzahl von Kühlelementen in der Laufrichtung des Glases ausgestattet ist, wobei jedes Heiz- oder Kühlelement aus einer Vielzahl von getrennten Strahlungssektoren in der Breitenrichtung des Bandes besteht, wobei jeder Strahlungssektor mit einem Organ zur Regelung (TIC) der Heiz- oder Kühlleistung dieses Strahlungssektors ausgestattet ist, das mit einem Organ zur Messung (4) der Temperatur des Glases für den betrachteten Sektor verbunden ist und von diesem Messorgan (4) ein Signal empfängt, **dadurch gekennzeichnet,**

**dass** sie ein Regelungssystem (R) umfasst, das derart geschaltet ist, dass es eingangsseitig die aus den Temperaturreglern (TIC) der verschiedenen Sektoren hervorgegangenen Sollwerte (S1, S2...Sn) empfängt, wobei dieses Regelungssystem dazu programmiert ist, ausgangsseitig einen Sollwert (Sj') zu liefern, der für die Steuerung der Regelventile (3) verwendet wird, mit dem Wert:

$$Sj' = \sum_{i=1}^{i=n} \left( \frac{\alpha ji}{Aj} \right) * Si$$

wobei $\alpha ji$ der Winkel ist, unter dem von einem Punkt Pj des Glasbandes der Tauscher 2i betrachtet wird, und wobei Aj gleich der Summe der Winkel ist, unter denen die verschiedenen Strahlungssektoren von dem betrachteten Punkt des Glasbandes betrachtet werden.

**Claims**

1. A method for regulating the radiative cooling sections of flat glass annealing lehrs provided with a plurality of heating elements and a plurality of cooling elements in the glass transport direction, each heating or cooling element comprising a plurality of distinct radiative sections across the web of the glass ribbon, **characterized in that** the setpoint (Sj) of the controller (TIC) of the heating or cooling capacity of each radiative section is weighted (Sj') by a system (R) for controlling a filter, called "matrix filter", which weights the influence of the signal delivered by a instrument (4) for measuring the temperature of the glass, for the regarding sector, taking account of the influence of the adjacent sections on the heating or cooling of the glass according to the geometry and the layout of the radiative sections with regard to the point of measurement of the glass temperature.

2. The method as claimed in claim 1 for regulating radiative cooling sections of flat glass annealing lehrs provided with a plurality of cooling elements in the glass transport direction consisting of sheet-andtube heat exchangers (2) parallel to the glass transport direction, each heat exchanger being supplied with cooling air via a control valve (3) controlled by a temperature controller (TIC) according to the difference between a setpoint and the signal delivered by an instrument (4) for measuring the temperature of the glass, **characterized in that** the setpoint of the controller of the heating or cooling capacity of each radiative section is weighted by a system (R) for controlling a filter, called "matrix filter", which weights the influence of the signal delivered by the instrument for measuring the temperature of the glass taking account of the influence of the adjacent sections on the heating or cooling of the glass according to the geometry and the layout of the radiative sections with regard to the point of measurement of the glass temperature.

3. The method as claimed in claim 1 for regulating radiative heating sections of flat glass annealing lehrs provided with a plurality of heating elements in the glass transport direction consisting of electric radiant tubes (5) perpendicular to the glass transport direction, each radiant tube comprising a succession of heating sections (7) across the web of the glass ribbon, of which the heating capacity is controlled by a temperature controller according to the difference between a setpoint and the signal delivered by an instrument for measuring the temperature of the glass, **characterized in that** the setpoint of the controller of the heating capacity of each section is weighted by a system (R) for controlling a filter, called "matrix filter", which weights the influence of the signal delivered by the instrument for measuring the temperature of the glass taking account of the influence of the adjacent sections on the heating or cooling of the glass according to the geometry and the layout of the radiative sections with regard to the point of measurement of the glass temperature.

4. The method as claimed in claim 2, **characterized in that** the control system (R) receives as input the setpoints (S1, S2...Sn) issuing from the temperature controllers (TIC) of the various sections, and is programmed to provide at the output a setpoint (Sj') used for controlling the control valves having the value:

$$Sj' = \sum_{i=1}^{i=n} \left( \frac{\alpha ji}{Aj} \right) * Si$$

$\alpha ji$ being the angle at which from a point Pj of the glass ribbon is seen the heat exchanger 2i, and where Aj is the sum of the angles at which the various radiative sections are seen from the point of the glass ribbon concerned.

5. The method as claimed in claim 3, **characterized in that** the control system (R) receives as input the setpoints (S1, S2...Sn) issuing from the temperature controllers (TIC) of the various sections, and is programmed to provide at the output a setpoint (Sj') used for controlling the heating capacity of the heating sections having the value:

$$Sj' = \sum_{i=1}^{i=n} \left( \frac{\alpha ji}{Aj} \right) * Si$$

$\alpha ji$ being the angle at which from a point Pj of the glass ribbon is seen the heat exchanger 2i, and where Aj is the sum of the angles at which the various radiative sections are seen from the point of the glass ribbon concerned.

6. The method as claimed in either of claims 1 and 2, **characterized in that** in the case of a lehr equipped with a number (n) of thermocouples, the matrix is determined according to the representative weight of each thermocouple.

7. A device for regulating the radiative cooling sections of flat glass annealing lehrs provided with a plurality of heating elements and a plurality of cooling elements in the glass transport direction, each radiative section being equipped with a controller (TIC) of the heating or cooling capacity of this radiative section which is connected to an instrument (4) for measuring the temperature of the glass for the section concerned, and receive a signal from this instrument (4), **characterized in that** it comprises a control system (R) which is connected in order to receive as input the setpoints (S1, S2...Sn) issuing from the temperature controllers (TIC) of the various sections, and is programmed to provide at the output a setpoint (Sj') used for controlling the control valves (3) having the value:

$$Sj' = \sum_{i=1}^{i=n} \left( \frac{\alpha ji}{Aj} \right) * Si$$

$\alpha ji$ being the angle at which from a point Pj of the glass ribbon is seen the heat exchanger 2i, and where Aj is the sum of the angles at which the various radiative sections are seen from the point of the glass ribbon concerned.

# FIG.1

zone 1  zone 2  zone 3  zone 4  zone 5

EP 1 981 820 B1

# FIG.2

Sens de défilement
du verre

# FIG.3

Air

# FIG.4

x

Echangeur $2_1$

$\alpha_1$

y

P

Feuille de verre(1)

$$\alpha_1(°) = 2^* \text{Arctg} \left( \dfrac{x/2}{y} \right) * \left( \dfrac{180}{\pi} \right)$$

# FIG.5

$$\alpha_2 (°) = \left( Arctg \left( \dfrac{\frac{x}{2} + x}{y} \right) * \left( \dfrac{180}{\pi} \right) \right) - \left( \dfrac{\alpha 1}{2} \right)$$

# FIG.6

Température 1      Température 2

Régulateur de température

TIC      TIC    ...................    TIC

S1         S2            S5

$$S1' = \left(\frac{\alpha 1}{A1}\right) * S1 + \left(\frac{\alpha 2}{A1}\right) * S2 + \left(\frac{\alpha 3}{A1}\right) * S3 + \left(\frac{\alpha 4}{A1}\right) * S4 + \left(\frac{\alpha 5}{A1}\right) * S5$$

S1'

R Système de régulation

3 Vanne de régulation

Air

Echangeur $2_1$

EP 1 981 820 B1

# FIG.7

# FIG.8

Sens de défilement
du ruban

Alimentations électriques

**EP 1 981 820 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6772610 A

- FR 2017511 A